# EUROPEAN PATENT SPECIFICATION

(11) **EP 4 507 545 B1**
(45) Date of publication and mention of the grant of the patent: **02.09.2026**
(21) Application number: 23719371.9
(22) Date of filing: 13.04.2023
(51) Int. Cl.: A47J 31/22, A47J 31/36

(54) **CENTRIFUGAL BEVERAGE CHAMBER WITH CLOSURE FASTENER**
GETRÄNKEZENTRIFUGATIONSKAMMER MIT VERSCHLUSS
CHAMBRE DE BOISSON CENTRIFUGE AVEC FIXATION DE FERMETURE

(30) Priority: 14.04.2022 EP 22168290
(43) Date of publication of application: 19.02.2025
(73) Proprietor: Société des Produits Nestlé S.A., 1800 Vevey (CH)
(72) Inventor: FANKHAUSER, Marcel, 3125 Toffen (CH); GAVILLET, Gilles, 1670 Ursy FR (CH); GORTCHACOW, Miguel, 1007 Lausanne (CH); SCHENK, Rudolf, 3510 Konolfingen (CH)
(74) Representative: Schnyder, Frank Simon
(86) International application number: PCT/EP2023/059650
(87) International publication number: WO 2023/198821

(56) References cited:
- US-A1- 2017 027 371
- US-A1- 2017 065 120

## Description

### Field of the Invention

The field of the invention pertains to beverage preparation machines by centrifuging capsules containing an ingredient of the beverage to be prepared.

For the purpose of the present description, a "beverage" is meant to include any human-consumable liquid substance, such as tea, coffee, hot or cold chocolate, milk, soup, baby food, etc... A "capsule" is meant to include any container such as a packaging for containing a pre-portioned beverage ingredient, e.g. a flavouring ingredient, the packaging forming an enclosure of any material, in particular an airtight or pervious material, porous or non-porous material, e.g. plastic, aluminium, recyclable and/or biodegradable packagings, and of any shape and structure, including soft pods or rigid cartridges for containing the ingredient.

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Brewing devices have been developed to facilitate insertion of a "fresh" capsule and removal of the capsule upon use. Examples of such brewing devices are disclosed in EP 1 767 129, WO 2009/043630, WO 2005/004683 and WO 2007/135136. It is known to secure brewing chambers using a hook system, as for example disclosed in WO 2006/005755 and WO 2006/005756.

The opening of capsules using a capsule opener is for example known from EP 0 512 470, EP 2 068 684, WO 02/00073, WO 02/35977, US 3,260,190, US 5,649,472, CH 605 293, EP 512 468, EP 242 556, WO 2014/076041, WO 2015/022342, WO 2015/022344, WO 2015/022345 and WO 2015/144356.

The preparation of a beverage by using centrifugation is also known. Examples of centrifugation processes and corresponding devices are disclosed in WO 2008/148601, WO2008/148650, US 5,566,605, WO 2013/007776, WO 2013/007779 and WO 2013/007780. WO 2017/065120 A1 discloses a centrifugal beverage preparation machine having first and second enclosing parts movable relative to each other for holding a capsule. The machine includes jaws arranged for guiding and holding the capsule in place during insertion.

It has also been proposed to facilitate the handling of capsules by systems for extracting them, in particular by motorizing the opening and/or closure of the extraction system for inserting and/or removing a capsule. Examples of such systems are for example disclosed in EP 1 767 129, WO 2009/113035, WO 2012/025258, WO 2012/025259, WO 2012/041605, WO 2013/127476, WO 2014/096122, WO 2014/096123 and EP2015185946.9.

The preparation of a beverage by using centrifugation is also known. Such beverage preparation includes: providing a beverage (flavoring) ingredient, e.g. as powder and/or leaves, in a capsule; circulating liquid into the capsule and rotating the capsule at sufficient speed to ensure interaction of the liquid with the ingredient while creating a gradient of pressure of liquid in the capsule. Such pressure increases gradually from the centre towards the periphery of the capsule. As liquid traverses the ingredient, e.g. coffee bed, extraction of the ingredient, e.g. coffee compounds, takes place and a liquid extract is obtained that flows out at the periphery of the capsule. Examples of such systems are disclosed in WO 2008/148601, WO 2013/007776, WO 2013/007779, WO 2013/007780, WO 2017/046294, WO 2017/068134 and WO 2017/202746. WO 2021/122502 discloses a centrifugal beverage machine with a rotatable valve arrangement for controlling a flow of water towards a centrifugal beverage mixing chamber. The capsule can be secured between facing capsule handlers that are secured by a fastening device, e.g. as disclosed in WO 2012/007293, WO 2013/007776, WO 2013/007779, WO 2013/007780 and WO 2014/102048.

WO 2008/148646 and WO 2008/148650 describe a beverage preparation device wherein a flow restriction is created downstream of the receptacle, in particular a capsule, for example, by a valve which opens or enlarges under the pressure created by the centrifuged liquid leaving the receptacle. The higher the rotational speed, the more the valve opens or enlarges. The valve can be formed by a mobile restriction part of the device which is elastically urged against a rim portion of the capsule. In WO 2017/068134 the centrifugal brewing chamber is fitted with an outlet valve that can be controlled by an inertia body of the machine rotating with the centrifugal brewing chamber. The valve leads into a collector forming a crema chamber in which the beverage upon undergoing a pressure drop at the valve is refined for dispensing into a user-recipient, e.g. a cup or a mug. Such collection chamber is typically arranged around the centrifugal brewing chamber, as for example disclosed in WO 2020/201469.

It has been proposed to prepare beverages by centrifugation along a horizontal axis.

WO 2015/173123 and WO 2015/173124 disclose a centrifugal brewing chamber formed between two enclosing parts that are relatively translatable between an open position and a closed position. The enclosing parts cooperate with a pair of jaws that are movable between a capsule holding position to hold a capsule between the enclosing parts in the open position and a capsule release position to release the capsule. The jaws are actuated by a first actuator and a second actuator that are activated by the enclosing parts during their the relative translation. The jaws guide a capsule into a position between the enclosing parts in the open position and immobilize the capsule thereinbetween. Then, when the enclosing parts are translated together to enclose the capsule, the jaws release the capsule so that the brewing chamber is formed about the capsule. The enclosing parts are rotated about a horizontal axis to centrifuge the capsule for preparing the beverage with the ingredient in the capsule. At the end of beverage preparation, centrifugation stops and the enclosing parts are relatively translated to the open position whereby the used capsule is allowed to drop from the enclosing parts. Then the jaws are brought back into their capsule holding position. Further centrifugal beverage machines are disclosed in EP2021201687.7, EP2021202356.8, EP2021216919.7, EP2021216927.0, EP2021216930.4, EP 21216965.0, EP2021216970.0 and EP2021216976.7

### Summary of the Invention

The invention relates to a machine for preparing a beverage from at least one ingredient. Normally such beverage is then dispensed to a user, e.g. to a user-cup or user-mug.

For instance, the machine is a coffee, tea, chocolate, cacao, milk or soup preparation machine. For example, the machine is arranged for preparing within a beverage processing module that includes an ingredient holder, a beverage by passing hot or cold water or another liquid through the ingredient held in the holder, such as a flavouring ingredient, of the beverage to be prepared, such as ground coffee or tea or chocolate or cacao or milk powder.

Such beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluent liquid, e.g. water, may be mixed with such ingredient to form the beverage. Typically, a predetermined amount of beverage is formed and dispensed on user-request, which corresponds to a portion (e.g. a serving). The volume of such a serving may be in the range of 15 to 1000 ml such as 25 to 600 ml for instance 40 to 250 ml, e.g. the volume for filling a cup or mug, depending on the type of beverage. Formed and dispensed beverages may be selected from ristrettos, espressos, lungos, cappuccinos, café latte, americano coffees, teas, etc... For example, a coffee machine may be configured for dispensing espressos, e.g. an adjustable volume of 20 to 60 ml per serving, and/or for dispensing lungos, e.g. a volume in the range of 70 to 200 ml per serving, and/or for dispensing americanos, e.g. a volume in the range of 150 to 750 ml.

An aspect of the invention relates to a machine for preparing a beverage from a flavouring ingredient in a processing cavity. Such a cavity may be configured for holding the ingredient supplied within a capsule. The beverage is prepared by mixing the ingredient with water and centrifugally driving such ingredient and water about a processing axis.

The centrifugation process for preparing a beverage is known for example from EP 2 000 062, EP 2 155 020, EP 2 152 128, WO 2008/148646, WO 2009/106175, WO 2009/106589, WO 2010/026045, WO 2010/026053, WO 2010/066736, WO 2008/148650, WO 2008/148834, WO 2010/066705, WO 2010/063644, WO 2011/023711, WO 2014/096122 or WO 2014/096123.

Typically, the machine includes one or more of the following components:
a) a fluid system in fluid communication with the flavouring ingredient during beverage preparation;
b) a thermal conditioner, such as in-line heater and/or cooler, for thermally conditioning a flow of liquid circulated to the flavouring ingredient or a batch thermal conditioner for circulating thermally conditioned liquid from the batch conditioner to the flavouring ingredient;
c) a liquid driver, such as a pump, for driving liquid to the flavouring ingredient, in particular a low pressure pump e.g. within the range of 1 to 5 bar, such as 1.5 to 3 bar;
d) a motor for driving the flavouring ingredient in rotation during beverage preparation;
e) an electric control unit, in particular comprising a printed circuit board (PCB), for receiving instructions from a user via an input user-interface and for controlling the thermal conditioner, liquid driver and motor(s); and
f) one or more sensors for sensing at least one characteristic selected from characteristics of fluid system, the thermal conditioner, the liquid driver, a liquid tank, an ingredient collector, a flow of the liquid (e.g. by a flowmeter), a pressure of the liquid and a temperature of the liquid, and for communicating such characteristic(s) to the control unit.

The abovementioned capsule may have a body containing the ingredient and a peripherally projecting flange, e.g. a body in the shape of a cup and a lid covering the mouth of the cup and extending beyond the mouth to form the peripherally projecting flange.

The capsule may have a body that is symmetric or asymmetric, conical or frusto-conical or cylindrical or spherical or hemispherical or frusto-spherical, containing the ingredient, e.g. ground coffee, tea or cacao or another beverage ingredient.

The capsule may be of the type described above under the header "field of the invention". The capsule may be a capsule that has a container-body, e.g. a generally cup-shaped or hemispherical or hemi-ellipsoidal body, having a flange to which a cover lid (or membrane) is attached, in particular sealed. Typically the capsule contains a beverage ingredient. Examples of suitable capsules are disclosed in WO 2008/148601, WO 2008/148604, WO 2008/148646, WO 2008/148650, WO 2008/148656, WO 2008/148834, WO 2011/141532, WO 2011/141535, WO 2013/072239, WO 2013/072297, WO 2013/072326, WO 2015/044400. The capsule may be of the variety commercialised by Nespresso under the brand Vertuo.

The machine has a rotatable ingredient handling system for holding and rotating about the processing axis the flavouring ingredient, e.g. contained within the abovementioned capsule, and water during centrifugation. The ingredient handling system has at least one beverage outlet and at least one water inlet for supplying the water to the flavouring ingredient, e.g. within the abovementioned capsule.

The handling system includes a first ingredient handler and a second ingredient handler that are movable one relative to the other from:
- an ingredient transfer configuration for receiving the flavouring ingredient by the first and second capsule handlers and/or releasing such ingredient from the first and second ingredient handlers; to
- an ingredient processing configuration for centrifuging the flavouring ingredient and the water by rotation about the processing axis;
- and vice versa.

Upon processing, the ingredient, e.g. contained in a capsule, may be collected in an ingredient (or ingredient capsule) collector downstream the handling system, as for example disclosed in WO 2009/074559 or WO 2009/135869.

The machine has a handler actuator, such as a motor or a user-handle, configured to relatively move the first and second capsule handlers between the transfer and the processing configurations, e.g. via a knee lever.

The machine includes at least one fastener movable selectively into a fastening position to fasten together the first and second capsule handlers in the processing configuration and into an unfastening position in which the first and second capsule handlers are movable from the processing configuration to the transfer configuration and/or vice versa.

The machine has a machine frame and/or housing which is stationary when the ingredient handling system is rotated for centrifugation and which supports the ingredient handling system. For example, the first and second handlers are mounted in rotation on the frame and/or housing via one or more bearings, such as ball bearings.

The fastener is actuated by the handler actuator into the fastening position and/or into the unfastening position.

For example, the fastener is biased into the fastening position or into the unfastening position e.g. by an elastic member, e.g. in the shape of an elongated arm.

The handler actuator can be angularly stationary relative to the frame and/or housing about the processing axis when the ingredient handling system is rotated for centrifugation.

The fastener may be angularly stationary relative to the first ingredient handler and/or second ingredient handler about the processing axis, e.g. when the ingredient handling system is rotated for centrifugation.

Providing one or more fasteners operated by such an actuator instead of using the actuator itself to maintain a closure force between the first and second ingredient handlers, typically by clamping the handlers together, may be used to avoid and/or reduce mechanical over-constraint situations on bearings, e.g. ball bearings, used to position the first and second handlers and/or may allow a reduction of the number of such bearings. Also the powering of the actuator, e.g. motor, driving the first and second handlers in rotation for centrifugation, may be reduced or the actuator itself may be downsized, as less adverse constraints to be overcome are likely to be generated.

The machine may include a fastener lock configured to lock the fastener in the fastening position and to unlock the fastener such that the fastener moves and/or is movable into the unfastening position. The fastener lock may be angularly stationary relative to the fastener about the processing axis, e.g. when the ingredient handling system is rotated for centrifugation.

The handler actuator can be configured to drive the fastener lock from:
- a fastener unlocking position into a fastener locking position once the first and second capsule handlers have been relatively moved by the handler actuator into the processing configuration; and/or
- a fastener locking position into a fastener unlocking position before the first and second capsule handlers are relatively moved by the handler actuator out of the processing configuration towards the transfer configuration.

The handler actuator can be configured to drive the fastener lock via a transmission that is angularly stationary relative to the frame and/or housing when the ingredient handling system is rotated for centrifugation. The transmission may be movable in translation to drive the fastener lock between its fastener unlocking position and its fastener locking position. For example, the transmission is movable in parallel to the processing axis.

The fastener can be integral with or mounted on one of the first and second capsule handlers and can cooperate with a fastener receiver that is integral with or mounted on the other of the first and second capsule handlers. The fastener may have a substantial hook shape and the fastener receiver may have a substantial hook cooperation shape.

The machine may include a plurality of fasteners distributed around the processing axis, e.g. peripherally about at least one of the first and second capsule handlers. The fasteners can be integral with or fixed to or assembled to a base.

The base may extend peripherally at least partly around one of the first and second capsule handlers.

The base can be connected to the fasteners by at least one corresponding elastic member. For example, each fastener is connected to the base by a corresponding elastic member whereby each elastic member connects to the base one, two or at most three fasteners.

The handler actuator can be configured to relatively move the first and second capsule handlers and/or actuate the fastener, when present via the abovementioned transmission, via a connection including at least one of: a gear connection, a lever connection, a cam follower and cam connection, and a magnetic connection.

The machine frame and/or housing may delimit an ingredient supply passage configured to allow supply by gravity of the ingredient towards the rotatable ingredient handling system and a waste evacuation passage configured to allow an evacuation by gravity of waste, e.g. used ingredient, from the rotatable ingredient handling system. The passage may be configured to allow a passage of the capsule when the cavity is configured for holding the ingredient supplied within the abovementioned capsule.

The supply passage can be provided with a guide for guiding the capsule when supplied. For example, the guide forms a recess and/or a rail. The guide can be configured to cooperate with a complementary capsule shape such as a capsule flange.

The guide may be associated with a stop configured to immobilize the capsule guided by the guide at a level between the first and second ingredient handlers, e.g. at the processing axis. For example, the stop is fixed to or integral with the guide. The guide or a portion thereof can be mounted movably towards and away from the processing axis, such as movably mounted on an elastic arm between:
- a holding position for immobilizing the capsule at a level between the first and second ingredient handlers, e.g. at the processing axis; and
- a release position for releasing the capsule from such level.

The machine may have a beverage passage, e.g. a beverage conduit, in fluid communication with the beverage outlet, the passage being configured to guide the beverage from the outlet towards a beverage dispensing outlet. For example, the passage is associated with a valve, such as a centrifugal and/or electric valve, for controlling the flow and/or the pressure of the beverage along the beverage passage.

The machine may include a beverage conditioner delimiting a conditioning cavity, e.g. between two surfaces that are movable relatively to one another e.g. rotatably movable, the conditioning cavity being fluidically connected with the beverage passage. The conditioning cavity may be configured to refine the beverage supplied from the beverage outlet via the beverage passage.

For instance, the valve is fluidically located between the beverage outlet and the conditioning cavity.

The conditioning cavity may include at least one surface, such as an inner surface, that is driven with the ingredient handling system when rotated for centrifugation. Such at least one surface is for example driven in rotation about the processing axis.

For instance, when the beverage supplied from the outlet includes a gas (e.g. air), the beverage conditioner may be configured to refine the mixing, e.g. dispersion, of the gas in the beverage, e.g. to improve the quality of a beverage-gas emulsification. When the beverage is coffee, then the conditioner may be configured to refine the coffee crema.

Typically the beverage conditioner leads to a downstream beverage dispenser configured to dispense the beverage to a user receptacle, e.g. a cup or mug.

The frame and/or housing may include or be fixed to a bottom configured to rest on a support surface external to such machine when the ingredient handling system is rotated about the processing axis for centrifugation, e.g. an external support surface formed by a table top. The processing axis can be at an angle relative to such bottom in the range of 0° to 60°, for instance of 0° to 45°, such as of 0° to 30°, e.g. of 0° to 15°, typically of substantially 0°.

The frame and/or housing can support a motor that is connected to the ingredient handling system, for instance connected directly or via a transmission, such as at least one of belts e.g. toothed belts, gears e.g. spur gears, and connecting rods.

One or more of the beverage outlet(s) and the water inlet(s) can be associated with one or more capsule openers, such as capsule piercers.

An opener may have a narrowed cross-section to increase the opening between the capsule and the opener upon opening.

An openers may be bent to increase the opening between the capsule and the opener upon opening.

For example, an opener may be bent about a bending axis that is radial relative to the processing axis or a bending axis that is tangential about processing axis.

The processing cavity may have a plurality of beverage outlets peripherally arranged at the processing cavity about the central processing axis and/or having the water inlet located at the processing cavity on or adjacent to the processing axis.

The invention also relates to a system including a machine as described above and the abovementioned capsule containing the flavouring ingredient.

A further aspect of the invention relates to a method of preparing in the above described machine the beverage from the flavouring ingredient supplied within the capsule into the machine. The method includes the steps of:
- holding the capsule between the first and second ingredient handlers in the transfer configuration;
- relatively moving the first and second ingredient handlers with the capsule into the ingredient processing configuration by actuation by the handler actuator;
- moving at least one fastener into the fastening position to fasten together the first and second capsule handlers with the capsule in the processing configuration by actuation by the handler actuator;
- feeding the water via the water inlet into the capsule in the processing cavity and centrifuging the flavouring ingredient with the water and forming the beverage;
- releasing the beverage from the capsule via the beverage passage;
- moving at least one fastener into the unfastening position by actuation by the handler actuator; and
- relatively moving by actuation by the handler actuator the first and second ingredient handlers with the capsule from the ingredient processing configuration to the ingredient transfer configuration and releasing the capsule from the first and second handlers.

Another aspect of the invention relates to a use of a capsule as the capsule for:
- being handled by a machine as described above;
- implementing the system as described above; or
- carrying out the method as described above.

For this use, the capsule:
- is held between the first and second ingredient handlers in the transfer configuration;
- is brought with the first and second ingredient handlers into the ingredient processing configuration by relatively moving the handlers into the ingredient processing configuration by actuation by the handler actuator;
- is fastened with the first and second capsule handlers in the processing configuration by moving the fastener(s) into the fastening position by actuation by the handler actuator;
- is supplied with water by feeding via the water inlet into the capsule in the processing cavity, the flavouring ingredient with the water being centrifuged and forming the beverage;
- releases the beverage via the beverage passage;
- is unfastened with the first and second capsule handlers by moving the fastener(s) into the unfastening position by actuation by the handler actuator; and
- is released from the first and second handlers by relatively moving the first and second ingredient handlers from the ingredient processing configuration to the ingredient transfer configuration by actuation by the handler actuator.

### Brief Description of the Drawings

The invention will now be described with reference to the schematic drawings, wherein:
- Figure 1 is a cross-sectional side view of part of a machine that has a rotatable ingredient handling system and at least one fastener according to an embodiment of the invention;
- Figure 2 is a cross-sectional side view of part of the handling system of the machine of Fig. 1, the handling system being in the ingredient transfer configuration;
- Figure 3 is a cross-sectional side view of part of the handling system of the machine of Fig. 1, the handling system being in the ingredient processing configuration without any ingredient capsule;
- Figure 4 is a cross-sectional side view of the handling system of the machine of Fig. 1, the handling system being in the ingredient processing configuration with an ingredient capsule;
- Figure 5 is a perspective view of fasteners of the machine of Fig. 1;
- Figure 6 is a cross-sectional view from above of the handling system of the machine of Fig. 1, the handling system being in the ingredient transfer configuration;
- Figure 7 is a cross-sectional view from above of the handling system of the machine of Fig. 1, the handling system being in the ingredient processing configuration without any ingredient capsule;
- Figure 8 is a cross-sectional side view of the of part of the machine of Fig. 1, the handling system being in the ingredient processing configuration and holding a capsule, the machine having a beverage conditioner and a thermal conditioner;
- Figure 9 is a perspective view of an ingredient handler fitted with beverage outlets and corresponding capsule openers as well as a water inlet with corresponding capsule openers, the capsule openers of the beverage outlets being bent towards the processing axis to provide openings increased in size in the capsule at the level of the openers;
- Figure 10 is a perspective view of several capsule openers (alternative to the ones shown in Fig. 9) to be associated with one or more beverage outlets, the capsule openers being bent tangentially about the processing axis to provide openings increased in size in the capsule at the level of the openers;
- Figure 11 is a perspective view of several capsule openers (alternative to the ones shown in Fig. 9) associated with a water inlet, the capsule openers having a radially narrowed cross-section at a level of a capsule upon opening of the capsule to provide openings increased in size in the capsule at the level of the openers; and
- Figure 12 is a perspective view of several capsule openers (alternative to the ones shown in Fig. 9 and 11) associated with a water inlet, the capsule openers having a tangentially narrowed cross-section at a level of a capsule upon opening of the capsule to provide openings increased in size in the capsule at the level of the openers.

### Detailed description

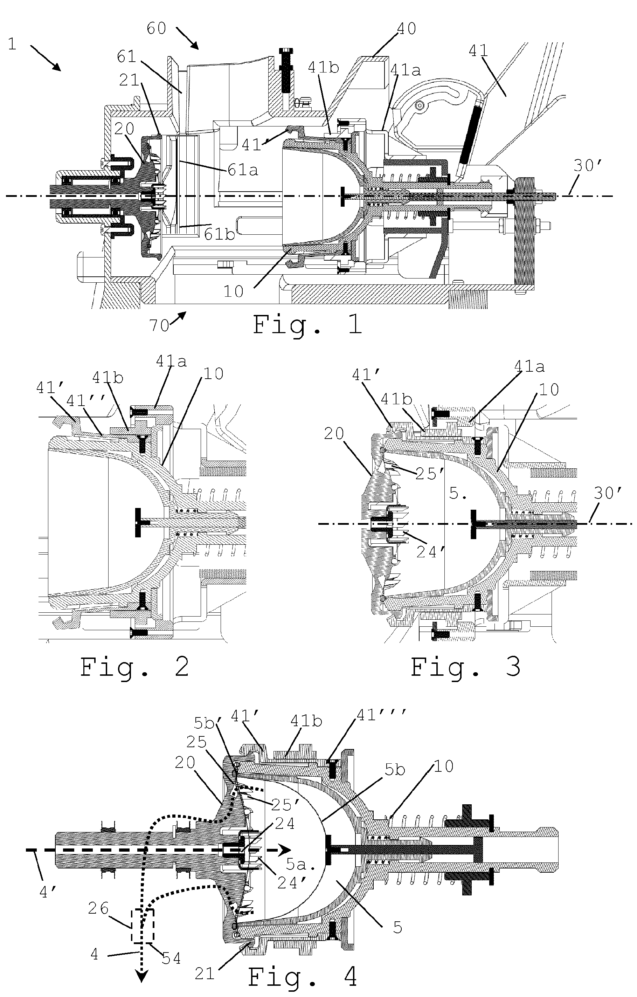

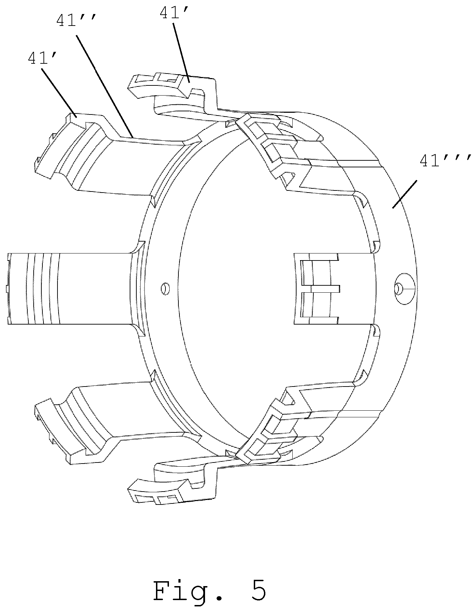

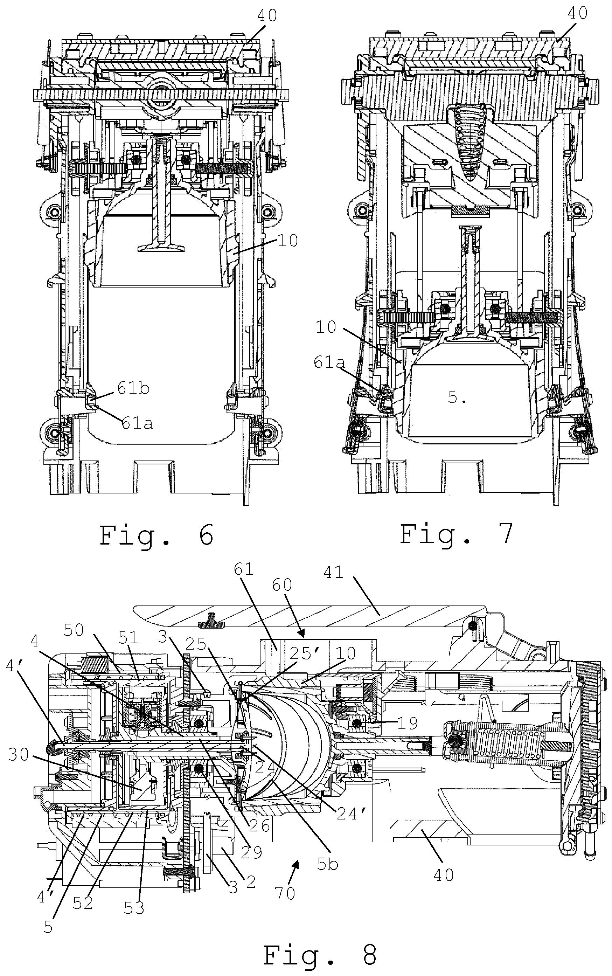

Figures 1 to 12 illustrate an exemplary embodiment of part of a machine 1 in accordance with the invention as well as components and variations thereof.

Machine 1 is configured for preparing a beverage 4 from a flavouring ingredient 5a in a processing cavity 5. Cavity 5 may be arranged for holding ingredient 5a supplied within a capsule 5b. Ingredient 5a is mixed with water 4' and centrifugally driven with water 4' about a processing axis 30' to form beverage 4.

Machine 1 includes a rotatable ingredient handling system 10,20 for holding and rotating flavouring ingredient 5a and water during centrifugation about processing axis 30'. Ingredient handling system 10,20 has at least one beverage outlet 25 and at least one water inlet 24 for supplying water 4' to ingredient 5a, e.g. within capsule 5b.

Water 4' to be supplied into cavity 5 may be heated in a heater 5, e.g. a thick film flow heater and/or a thermoblock flow heater and/or a water batch boiler. Heater 5 may be generally tubular and/or provided with a helicoidal channel for guiding water 4'.

System 10,20 has a first ingredient handler 10 and a second ingredient handler 20 that are movable one relative to the other from:
- an ingredient transfer configuration for receiving ingredient 5a by first and second capsule handlers 10,20 and/or releasing ingredient 5a from first and second ingredient handlers 10,20; to
- an ingredient processing configuration for centrifuging ingredient 5a and water 4' by rotation about the processing axis 30';
- and vice versa.

One handler may be moved away from or towards the other, or both handlers may be moved together or apart.

Machine 1 includes a handler actuator 41, such as a motor or a user-handle, configured to relatively move first and second capsule handlers 10,20 between the transfer and the processing configurations.

Machine 1 has at least one fastener 41' movable selectively into:
- a fastening position to fasten together first and second capsule handlers 10,20 in the processing configuration; and
- an unfastening position in which first and second capsule handlers 10,20 are movable from the processing configuration to the transfer configuration and/or vice versa.

Machine 1 includes a machine frame and/or housing 40 which is stationary when ingredient handling system 10,20 is rotated for centrifugation and which supports ingredient handling system 10,20. First and second handlers 10,20 may be mounted in rotation on frame and/or housing 40 via one or more bearings 19,29, such as ball bearings.

When first and second handlers 10,20 are moved between the transfer and processing configurations, one handler 20 may be stationary and the other handler 10 may be movable in machine frame and/or housing 40, or both handlers may be movable in the machine frame and/or housing.

Fastener 41' is actuated by handler actuator 41 into the fastening position and/or into the unfastening position. Fastener 41' can be biased into the fastening position or into the unfastening position, for instance by an elastic member 41'' e.g. an elongated arm.

Handler actuator 41 may be angularly stationary relative to frame and/or housing 40 about processing axis 30' when ingredient handling system 10,20 is rotated for centrifugation.

Fastener 41' can be angularly stationary relative to first ingredient handler 10 and/or second ingredient handler 20 about processing axis 30', e.g. when ingredient handling system 10,20 is rotated for centrifugation.

Machine 1 may include a fastener lock 41b configured to lock fastener 41' in the fastening position and to unlock fastener 41' such that fastener 41' moves and/or is movable into the unfastening position. For example, fastener lock 41b is angularly stationary relative to fastener 41' about processing axis 30', e.g. when ingredient handling system 10,20 is rotated for centrifugation.

Handler actuator 41 may be configured to drive fastener lock 41b from:
- a fastener unlocking position into a fastener locking position once first and second capsule handlers 10,20 have been relatively moved by handler actuator 41 into the processing configuration; and/or
- a fastener locking position into a fastener unlocking position before first and second capsule handlers 10,20 are relatively moved by handler actuator 41 out of the processing configuration towards the transfer configuration.

Handler actuator 41 can be configured to drive fastener lock 41b via a transmission 41a that is angularly stationary relative to the frame and/or housing 40 about processing axis 30' when ingredient handling system 10,20 is rotated for centrifugation. Transmission 41a may be movable in translation to drive fastener lock 41b between its fastener unlocking position and its fastener locking position. For example, transmission 41a is movable in parallel to processing axis 30'.

Fastener 41' may be integral with or mounted on one of first and second capsule handlers 10,20 and cooperates with a fastener receiver 21 that is integral with or mounted on the other of first and second capsule handlers 10,20. Fastener 41' can have a substantial hook shape and fastener receiver 21 can have a substantial hook cooperation shape.

Machine 1 may include a plurality of fasteners 41' distributed around processing axis 30', e.g. peripherally about at least one of first and second capsule handlers 10,20. Fasteners 41' may be integral with or fixed to or assembled to a base 41‴.

Base 41‴ may extend peripherally at least partly around one of first and second capsule handlers 10,20.

Base 41‴ may be connected to fasteners 41' by at least one corresponding elastic member 41''. For example each fastener 41' is connected to base 41‴ by a corresponding elastic member 41" whereby each elastic member 41'' connects to base 41‴ one, two or at most three fasteners 41' to base 41‴.

Handler actuator 41 can be configured to relatively move first and second capsule handlers 10,20 and/or actuate fastener 41', when present via transmission 41a, via a connection comprising at least one of: a gear connection, a lever connection, a cam follower and cam connection, and a magnetic connection.

Machine frame and/or housing 40 may delimit an ingredient supply passage 60 configured to allow supply by gravity of ingredient 5a towards rotatable ingredient handling system 10,20 and a waste evacuation passage 70 configured to allow an evacuation by gravity of waste, e.g. used ingredient, from rotatable ingredient handling system 10,20. Such passages can be configured to allow a passage of capsule 5b when cavity 5 is configured for holding ingredient 5a supplied within a capsule 5b.

Supply passage 60 can be provided with a guide 61,61a for guiding capsule 5b when supplied, such as a guide 61,61a forming a recess and/or a rail, guide 61,61a being configured to cooperate with a complementary capsule shape such as a capsule flange 5b', guide 61,61a being associated with a stop 61b configured to immobilize capsule 5b guided by guide 61,61a at a level between first and second ingredient handlers 10,20, e.g. at processing axis 30'. For example stop 61b is fixed to or integral with guide 61,61a.

The guide or a portion 61a thereof may be mounted movably towards and away from processing axis 30', for example movably mounted on an elastic arm between a holding position for immobilizing capsule 5b at a level between first and second ingredient handlers 10,20, **e.g.** at processing axis 30', and a release position for releasing capsule 5b from such level.

Machine 1 can have a beverage passage 26, e.g. a beverage conduit, in fluid communication with beverage outlet 25. Passage 26 may be configured to guide beverage 4 from outlet 25 towards a beverage dispensing outlet 54. Passage 26 may be associated with a valve 30, such as a centrifugal and/or electric valve, for controlling the flow and/or the pressure of beverage 4 along passage 26.

Machine 1 can include a beverage conditioner 50 delimiting a conditioning cavity 51, e.g. between two surfaces 52,53 that are movable relatively to one another e.g. rotatably movable, conditioning cavity 51 being fluidically connected with beverage passage 26. Conditioning cavity 51 can be being configured to refine beverage 4 supplied from beverage outlet 25 via beverage passage 26. Valve 30 can be fluidically located between beverage outlet 25 and conditioning cavity 51.

Frame and/or housing 40 may include or be fixed to a bottom configured to rest on a support surface external to such machine 1 when ingredient handling system 10,20 is rotated about processing axis 30' for centrifugation. External support surface may be formed by a table top. During centrifugation, processing axis 30' can be at an angle relative to such bottom in the range of 0° to 60°, for instance of 0° to 45°, such as of 0° to 30°, e.g. of 0° to 15°, typically of substantially 0°.

Frame and/or housing 40 can support a motor 2 that is connected to ingredient handling system 10,20, for instance connected directly or via a transmission 3 such as at least one of belts e.g. toothed belts, gears e.g. spur gears, and connecting rods.

One or more of beverage outlet(s) 25 and water inlet(s) 24 may be associated with one or more capsule openers 24',25', such as capsule piercers 24',25'.

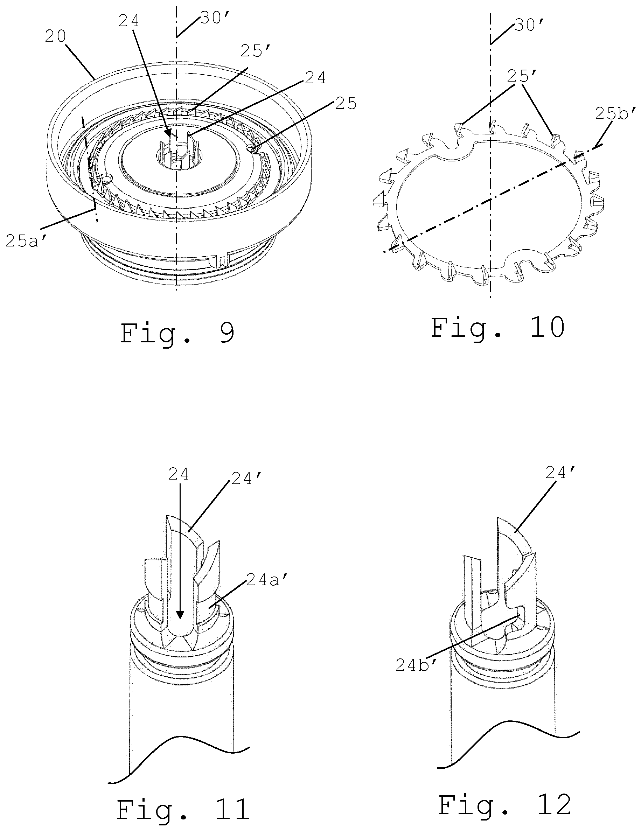

Openers 24' may have a narrowed cross-section 24a' ,24b' (e.g. Figs 11 and 12) to increase the opening between capsule 5b and openers 24' upon opening.

Openers 25' may be bent to increase the opening between capsule 5b and openers 25' upon opening.

For example, an opener 25' may be bent about an axis 25b' that is radial relative to processing axis 30' (e.g. Fig. 10) or an axis 25a' that is tangential about processing axis (e.g. Fig. 9).

Processing cavity 5 can have a plurality of beverage outlets 25 peripherally arranged at processing cavity 5 about central processing axis 30' and/or have water inlet 24 located at processing cavity 5 on or adjacent to processing axis 30'.

During operation, beverage 4 can be prepared from flavouring ingredient 5a supplied within capsule 5b into machine 1. The beverage preparation method can include:
- holding capsule 5b between first and second ingredient handlers 10,20 in the transfer configuration;
- relatively moving first and second ingredient handlers 10,20 with capsule 5b into ingredient processing configuration by actuation by handler actuator 41;
- moving at least one fastener 41' into the fastening position to fasten together first and second capsule handlers 10,20 with capsule 5b in the processing configuration by actuation by handler actuator 41;
- feeding water 4' via water inlet 24 into capsule 5b in processing cavity 5 and centrifuging flavouring ingredient 5a with water 4' and forming beverage 4;
- releasing beverage 4 from capsule 5b via beverage passage 26;
- moving at least one fastener 41' into the unfastening position by actuation by handler actuator 41; and
- relatively moving by actuation by handler actuator 41 first and second ingredient handlers 10,20 with capsule 5b from the ingredient processing configuration to the ingredient transfer configuration and releasing capsule 5b from first and second handlers 10,20.

## Claims

1. A machine (1) for preparing a beverage (4) from a flavouring ingredient (5a) in a processing cavity (5), such as a cavity (5) for holding said ingredient (5a) supplied within a capsule (5b), by mixing said ingredient (5a) with water (4') and centrifugally driving such ingredient (5a) and said water (4') about a processing axis (30') to form said beverage (4), such machine (1) comprising:
- a rotatable ingredient handling system (10,20) for holding and rotating said flavouring ingredient (5a) and water during centrifugation about the processing axis (30'), the ingredient handling system (10,20) having at least one beverage outlet (25) and at least one water inlet (24) for supplying said water (4') to said ingredient (5a) e.g. within said capsule (5b), the system (10,20) having a first ingredient handler (10) and a second ingredient handler (20) that are movable one relative to the other from:
- an ingredient transfer configuration for receiving said ingredient (5a) by the first and second capsule handlers (10,20) and/or releasing said ingredient (5a) from the first and second ingredient handlers (10,20); to
- an ingredient processing configuration for centrifuging said ingredient (5a) and water (4') by rotation about the processing axis (30');
- and vice versa;
- a handler actuator (41), such as a motor or a user-handle, configured to relatively move the first and second capsule handlers (10,20) between the transfer and the processing configurations; and
- a machine frame and/or housing (40) which is stationary when the ingredient handling system (10,20) is rotated for centrifugation and which supports the ingredient handling system (10,20), optionally the first and second handlers (10,20) being mounted in rotation on the frame and/or housing (40) via one or more bearings (19,29), such as ball bearings,
**characterised in that** said machine further comprises at least one fastener movable selectively into a fastening position to fasten together the first and second capsule handlers in the processing configuration and into an unfastening position in which the first and second capsule handlers are movable from the processing configuration to the transfer configuration and/or vice versa, wherein the fastener (41') is actuated by the handler actuator (41) into the fastening position and/or into the unfastening position, the fastener (41') being for example biased into the fastening position or into the unfastening position e.g. by an elastic member (41") e.g. elongated arm, optionally:
- the handler actuator (41) being angularly stationary relative to the frame and/or housing (40) about the processing axis (30') when the ingredient handling system (10,20) is rotated for centrifugation; and/or
- the fastener (41') being angularly stationary relative to the first ingredient handler (10) and/or second ingredient handler (20) about the processing axis (30'), e.g. when the ingredient handling system (10,20) is rotated for centrifugation.

2. The machine of claim 1, which comprises a fastener lock (41b) configured to lock the fastener (41') in the fastening position and to unlock the fastener (41') such that the fastener (41') moves and/or is movable into the unfastening position, optionally the fastener lock (41b) being angularly stationary relative to the fastener (41') about the processing axis (30') e.g. when the ingredient handling system (10,20) is rotated for centrifugation.

3. The machine of claim 2, wherein the handler actuator (41) is configured to drive the fastener lock (41b) from:
- a fastener unlocking position into a fastener locking position once the first and second capsule handlers (10,20) have been relatively moved by the handler actuator (41) into the processing configuration; and/or
- a fastener locking position into a fastener unlocking position before the first and second capsule handlers (10,20) are relatively moved by the handler actuator (41) out of the processing configuration towards the transfer configuration.

4. The machine of any preceding claim, wherein the handler actuator (41) is configured to drive the fastener lock (41b) via a transmission (41a) that is angularly stationary relative to the frame and/or housing (40) about the processing axis (30') when the ingredient handling system (10,20) is rotated for centrifugation, optionally the transmission (41a) being movable in translation to drive the fastener lock (41b) between its fastener unlocking position and its fastener locking position, **e.g.** the transmission (41a) being movable in parallel to the processing axis (30').

5. The machine of any preceding claim, wherein the fastener (41') is integral with or mounted on one of the first and second capsule handlers (10,20) and cooperates with a fastener receiver (21) that is integral with or mounted on the other of the first and second capsule handlers (10,20), the fastener (41') having a substantial hook shape and the fastener receiver (21) having a substantial hook cooperation shape.

6. The machine of any preceding claim, which comprises a plurality of fasteners (41') distributed around the processing axis (30'), e.g. peripherally about at least one of the first and second capsule handlers (10,20), optionally the fasteners (41') being integral with or fixed to or assembled to a base (41‴), the base (41‴) for example:
- extending peripherally at least partly around one of the first and second capsule handlers (10,20); and/or
- being connected to the fasteners (41') by at least one corresponding elastic member (41"), for instance each fastener (41') being connected to the base (41‴) by a corresponding elastic member (41") whereby each elastic member (41'') connects to the base (41‴) one, two or at most three fasteners (41').

7. The machine of any preceding claim, wherein the handler actuator (41) is configured to relatively move the first and second capsule handlers (10,20) and/or actuate the fastener (41'), when present via said transmission (41a), via a connection comprising at least one of: a gear connection, a lever connection, a cam follower and cam connection, and a magnetic connection.

8. The machine of any preceding claim, wherein the machine frame and/or housing (40) delimits an ingredient supply passage (60) configured to allow supply by gravity of said ingredient (5a) towards the rotatable ingredient handling system (10,20) and a waste evacuation passage (70) configured to allow an evacuation by gravity of waste, e.g. used ingredient, from the rotatable ingredient handling system (10,20), optionally said passage being configured to allow a passage of said capsule (5b) when the cavity (5) is configured for holding said ingredient (5a) supplied within a capsule (5b).

9. The machine of claim 8, wherein the supply passage (60) is provided with a guide (61,61a) for guiding said capsule (5b) when supplied, such as a guide (61,61a) forming a recess and/or a rail, the guide (61,61a) being configured to cooperate with a complementary capsule shape such as a capsule flange (5b'), the guide (61,61a) being associated with a stop (61b) configured to immobilize said capsule (5b) guided by the guide (61,61a) at a level between the first and second ingredient handlers (10,20) e.g. at the processing axis (30'), for instance a stop (61b) fixed to or integral with the guide (61,61a), optionally the guide or a portion (61a) thereof being mounted movably towards and away from the processing axis (30') e.g. movably mounted on an elastic arm between a holding position for immobilizing said capsule (5b) at a level between the first and second ingredient handlers (10,20), e.g. at the processing axis (30'), and a release position for releasing said capsule (5b) from said level.

10. The machine of any preceding claim, which comprises a beverage passage (26), e.g. a beverage conduit, in fluid communication with the beverage outlet (25), the passage (26) being configured to guide said beverage (4) from the outlet (25) towards a beverage dispensing outlet (54), the passage (26) being optionally associated with a valve (30), such as a centrifugal and/or electric valve, for controlling the flow and/or the pressure of said beverage (4) along the beverage passage (26).

11. The machine of claim 10, which comprises a beverage conditioner (50) delimiting a conditioning cavity (51), e.g. between two surfaces (52,53) that are movable relatively to one another e.g. rotatably movable, the conditioning cavity (51) being fluidically connected with the beverage passage (26), the conditioning cavity (51) being configured to refine said beverage (4) supplied from the beverage outlet (25) via the beverage passage (26), the valve (30) being for instance fluidically located between the beverage outlet (25) and the conditioning cavity (51).

12. The machine of any preceding claim, wherein:
- the frame and/or housing comprises or is fixed to a bottom configured to rest on a support surface external to such machine (1) when the ingredient handling system (10,20) is rotated about the processing axis (30') for centrifugation, e.g. an external support surface formed by a table top, the processing axis (30') being at an angle relative to such bottom in the range of 0° to 60°, for instance of 0° to 45°, such as of 0° to 30°, e.g. of 0° to 15°, typically of substantially 0°; and/or
- the frame and/or housing supporting a motor (2) that is connected to the ingredient handling system (10,20), for instance connected directly or via a transmission (3) such as at least one of belts e.g. toothed belts, gears e.g. spur gears, and connecting rods; and/or
- one or more of the beverage outlet(s) (25) and the water inlet(s) (24) being associated with one or more capsule openers (24',25'), such as capsule piercers (24',25'); and/or
- the processing cavity (5) having a plurality of beverage outlets (25) peripherally arranged at the processing cavity (5) about the central processing axis (30') and/or having the water inlet (24) located at the processing cavity (5) on or adjacent to the processing axis (30').

13. A system comprising a machine (1) as defined in any preceding claim and said capsule (5b) containing said flavouring ingredient (5a).

14. A method of preparing in a machine (1), as defined in any one of claims 1 to 12, said beverage (4) from said flavouring ingredient (5a) supplied within said capsule (5b) into the machine (1), the method comprising:
- holding said capsule (5b) between the first and second ingredient handlers (10,20) in the transfer configuration;
- relatively moving the first and second ingredient handlers (10,20) with said capsule (5b) into the ingredient processing configuration by actuation by the handler actuator (41);
- moving said at least one fastener (41') into the fastening position to fasten together the first and second capsule handlers (10,20) with said capsule (5b) in the processing configuration by actuation by the handler actuator (41);
- feeding said water (4') via the water inlet (24) into said capsule (5b) in the processing cavity (5) and centrifuging the flavouring ingredient (5a) with the water (4') and forming said beverage (4);
- releasing the beverage (4) from said capsule (5b) via the beverage passage (26);
- moving said at least one fastener (41') into the unfastening position by actuation by the handler actuator (41); and
- relatively moving by actuation by the handler actuator (41) the first and second ingredient handlers (10,20) with said capsule (5b) from the ingredient processing configuration to the ingredient transfer configuration and releasing said capsule (5b) from the first and second handlers (10,20).

15. A use of a capsule as said capsule (5b) is for:
- being handled by a machine as defined in any one of claims 1 to 12;
- implementing the system as defined in claim 13; or
- carrying out the method of claim 14,
wherein said capsule (5b):
- is held between the first and second ingredient handlers (10,20) in the transfer configuration;
- is brought with the first and second ingredient handlers (10,20) into the ingredient processing configuration by relatively moving the handlers (10,20) into the ingredient processing configuration by actuation by the handler actuator (41);
- is fastened with the first and second capsule handlers (10,20) in the processing configuration by moving the fastener(s) (41') into the fastening position by actuation by the handler actuator (41);
- is supplied with said water (4') by feeding via the water inlet (24) into said capsule (5b) in the processing cavity (5), the flavouring ingredient (5a) with the water (4') being centrifuged and forming said beverage (4);
- releases the beverage (4) via the beverage passage (26);
- is unfastened with the first and second capsule handlers (10,20) by moving the fastener(s) (41') into the unfastening position by actuation by the handler actuator (41); and
- is released from the first and second handlers (10,20) by relatively moving the first and second ingredient handlers (10,20) from the ingredient processing configuration to the ingredient transfer configuration by actuation by the handler actuator (41).

## Patentansprüche

1. Maschine (1) zum Zubereiten eines Getränks (4) aus einem Geschmacksinhaltsstoff (5a) in einem Verarbeitungshohlraum (5), wie einem Hohlraum (5) zum Halten des innerhalb einer Kapsel (5b) bereitgestellten Inhaltsstoffs (5a) durch Mischen des Inhaltsstoffs (5a) mit Wasser (4') und zentrifugales Antreiben dieses Inhaltsstoffs (5a) und des Wassers (4') um eine Verarbeitungsachse (30'), um das Getränk (4) auszubilden, diese Maschine (1) umfassend:
- ein drehbares Inhaltsstoffhandhabungssystem (10,20) zum Halten und Drehen des Geschmacksinhaltsstoffs (5a) und des Wassers während einer Zentrifugation um die Verarbeitungsachse (30'), wobei das Inhaltsstoffhandhabungssystem (10,20) mindestens einen Getränkeauslass (25) und mindestens einen Wassereinlass (24) zum Bereitstellen des Wassers (4') zu dem Inhaltsstoff (5a) aufweist, z. B innerhalb der Kapsel (5b), wobei das System (10,20) eine erste Inhaltsstoffhandhabungsvorrichtung (10) und eine zweite Inhaltsstoffhandhabungsvorrichtung (20) aufweist, die relativ zueinander beweglich sind von:
- einer Inhaltsstofftransferkonfiguration zum Aufnehmen des Inhaltsstoffs (5a) durch die erste und die zweite Kapselhandhabungsvorrichtung (10,20) und/oder Freigeben des Inhaltsstoffs (5a) aus der ersten und der zweiten Inhaltsstoffhandhabungsvorrichtung (10,20); zu
- einer Inhaltsstoffverarbeitungskonfiguration zum Zentrifugieren des Inhaltsstoffs (5a) und des Wassers (4') durch Drehung um die Verarbeitungsachse (30');
- und umgekehrt;
- einen Handhabungsvorrichtungsaktuator (41), wie einen Motor oder einen Benutzergriff, der konfiguriert ist, um die erste und die zweite Kapselhandhabungsvorrichtung (10,20) zwischen der Transfer- und der Verarbeitungskonfigurationen relativ zu bewegen; und
- einen Maschinenrahmen und/oder ein Gehäuse (40), die stationär sind, wenn das Inhaltsstoffhandhabungssystem (10,20) für die Zentrifugation gedreht wird, und die das Inhaltsstoffhandhabungssystem (10,20) tragen, wobei die erste und die zweite Handhabungsvorrichtung (10,20) optional über ein oder mehrere Lager (19,29), wie Kugellager, an dem Rahmen und/oder Gehäuse (40) drehend montiert sind,
**dadurch gekennzeichnet, dass** die Maschine ferner mindestens ein Befestigungselement umfasst, das selektiv in eine Befestigungsposition, um die erste und die zweite Kapselhandhabungsvorrichtung in der Verarbeitungskonfiguration aneinander zu befestigen, und in eine Lösungsposition beweglich ist, in der die erste und die zweite Kapselhandhabungsvorrichtung von der Verarbeitungskonfiguration zu der Transferkonfiguration und/oder umgekehrt beweglich sind, wobei das Befestigungselement (41') durch den Handhabungsvorrichtungsaktuator (41) in die Befestigungsposition und/oder in die Lösungsposition betätigt wird, wobei das Befestigungselement (41') zum Beispiel in die Befestigungsposition oder in die Lösungsposition vorgespannt wird, z. B. durch ein elastisches Glied (41"), z. B. einen länglichen Arm, optional:
- wobei der Handhabungsvorrichtungsaktuator (41) relativ zu dem Rahmen und/oder Gehäuse (40) um die Verarbeitungsachse (30') winkelmäßig stationär ist, wenn das Inhaltsstoffhandhabungssystem (10,20) für die Zentrifugation gedreht wird; und/oder
- wobei das Befestigungselement (41') relativ zu der ersten Inhaltsstoffhandhabungsvorrichtung (10) und/oder der zweiten Inhaltsstoffhandhabungsvorrichtung (20) um die Verarbeitungsachse (30') winkelmäßig stationär ist, z. B. wenn das Inhaltsstoffhandhabungssystem (10,20) für die Zentrifugation gedreht wird.

2. Maschine nach Anspruch 1, umfassend eine Befestigungselementverriegelung (41b), die konfiguriert ist, um das Befestigungselement (41') in der Befestigungsposition zu verriegeln und um das Befestigungselement (41') zu entriegeln, sodass sich das Befestigungselement (41') bewegt und/oder in die Lösungsposition beweglich ist, wobei die Befestigungselementverriegelung (41b) optional relativ zu dem Befestigungselement (41') um die Verarbeitungsachse (30') winkelmäßig stationär ist, z. B. wenn das Inhaltsstoffhandhabungssystem (10,20) für die Zentrifugation gedreht wird.

3. Maschine nach Anspruch 2, wobei der Handhabungsvorrichtungsaktuator (41) konfiguriert ist, um die Befestigungselementverriegelung (41b) anzutreiben aus:
- einer Befestigungselemententriegelungsposition in eine Befestigungselementverriegelungsposition, sobald die erste und die zweite Kapselhandhabungsvorrichtung (10,20) durch den Handhabungsvorrichtungsaktuator (41) in die Verarbeitungskonfiguration relativ bewegt worden sind; und/oder
- einer Befestigungselementverriegelungsposition in eine Befestigungselemententriegelungsposition, bevor die erste und die zweite Kapselhandhabungsvorrichtung (10,20) durch den Handhabungsvorrichtungsaktuator (41) von der Verarbeitungskonfiguration zu der Transferkonfiguration hin relativ bewegt werden.

4. Maschine nach einem der vorstehenden Ansprüche, wobei der Handhabungsvorrichtungsaktuator (41) konfiguriert ist, um die Befestigungselementverriegelung (41b) über ein Getriebe (41a) anzutreiben, das relativ zu dem Rahmen und/oder Gehäuse (40) um die Verarbeitungsachse (30') winkelmäßig stationär ist, wenn das Inhaltsstoffhandhabungssystem (10,20) für die Zentrifugation gedreht wird, wobei das Getriebe (41a) optional translatorisch beweglich ist, um die Befestigungselementverriegelung (41b) zwischen ihrer Befestigungselemententriegelungsposition und ihrer Befestigungselementverriegelungsposition anzutreiben, z. B. wobei das Getriebe (41a) parallel zu der Verarbeitungsachse (30') bewegbar ist.

5. Maschine nach einem der vorstehenden Ansprüche, wobei das Befestigungselement (41') mit einer der ersten und der zweiten Kapselhandhabungsvorrichtung (10,20) integriert oder an dieser montiert ist und mit einer Befestigungselementaufnahme (21) zusammenwirkt, die mit der anderen der ersten und der zweiten Kapselhandhabungsvorrichtung (10,20) integriert oder an dieser montiert ist, wobei das Befestigungselement (41') im Wesentlichen eine Hakenform aufweist und die Befestigungselementaufnahme (21) im Wesentlichen eine Hakenzusammenwirkungsform aufweist.

6. Maschine nach einem der vorstehenden Ansprüche, umfassend eine Vielzahl von Befestigungselementen (41'), die um die Verarbeitungsachse (30') herum verteilt sind, z. B. peripher um mindestens eine der ersten und der zweiten Kapselhandhabungsvorrichtung (10,20), wobei die Befestigungselemente (41') optional mit einer Basis (41‴) integriert oder an dieser fixiert oder mit dieser zusammengefügt sind, wobei die Basis (41‴) zum Beispiel:
- sich peripher mindestens teilweise um eine der ersten und der zweiten Kapselhandhabungsvorrichtung (10,20) herum erstreckt; und/oder
- mit den Befestigungselementen (41') durch mindestens ein entsprechendes elastisches Glied (41") verbunden ist, wobei beispielsweise jedes Befestigungselement (41') durch ein entsprechendes elastisches Glied (41") mit der Basis (41‴) verbunden ist, wobei jedes elastische Glied (41") ein, zwei oder höchstens drei Befestigungselemente (41') mit der Basis (41‴) verbindet.

7. Maschine nach einem der vorstehenden Ansprüche, wobei der Handhabungsvorrichtungsaktuator (41) konfiguriert ist, um die erste und die zweite Kapselhandhabungsvorrichtung (10,20) relativ zu bewegen und/oder das Befestigungselement (41') zu betätigen, wenn vorhanden über das Getriebe (41a), über eine Verbindung, umfassend mindestens eine von: einer Zahnradverbindung, einer Hebelverbindung, einer Nockenstößel- und Nockenverbindung und einer magnetischen Verbindung.

8. Maschine nach einem der vorstehenden Ansprüche, wobei der Maschinenrahmen und/oder das Gehäuse (40) einen Inhaltsstoffbereitstellungsdurchgang (60), der konfiguriert ist, um eine Bereitstellung durch Schwerkraft des Inhaltsstoffs (5a) zu dem drehbaren Inhaltsstoffhandhabungssystem (10,20) zu ermöglichen, und einen Abfallabführdurchgang (70) abgrenzt, der konfiguriert ist, um eine Abführung durch Schwerkraft von Abfall, z. B. verbrauchtem Inhaltsstoff, aus dem drehbaren Inhaltsstoffhandhabungssystem (10,20) zu ermöglichen, wobei der Durchgang optional konfiguriert ist, um einen Durchgang der Kapsel (5b) zu ermöglichen, wenn der Hohlraum (5) zum Halten des innerhalb einer Kapsel (5b) bereitgestellten Inhaltsstoffs (5a) konfiguriert ist.

9. Maschine nach Anspruch 8, wobei der Bereitstellungsdurchgang (60) mit einer Führung (61,61a) zum Führen der Kapsel (5b), wenn sie bereitgestellt wird, bereitgestellt ist, wie einer Führung (61,61a), die eine Vertiefung und/oder eine Schiene ausbildet, wobei die Führung (61,61a) konfiguriert ist, um mit einer komplementären Kapselform wie einem Kapselflansch (5b') zusammenzuwirken, wobei die Führung (61,61a) mit einem Anschlag (61b) verknüpft ist, der konfiguriert ist, um die durch die Führung (61,61a) geführte Kapsel (5b) auf einer Ebene zwischen der ersten und der zweiten Inhaltsstoffhandhabungsvorrichtung (10,20) zu immobilisieren, z. B. an der Verarbeitungsachse (30'), beispielsweise einem Anschlag (61b), der an der Führung (61,61a) fixiert oder mit dieser integriert ist, wobei die Führung oder ein Abschnitt (61a) davon optional zu der Verarbeitungsachse (30') hin und von dieser weg montiert ist, z. B. an einem elastischen Arm zwischen einer Halteposition zum Immobilisieren der Kapsel (5b) auf einer Ebene zwischen der ersten und der zweiten Inhaltsstoffhandhabungsvorrichtung (10,20), z. B. an der Verarbeitungsachse (30'), und einer Freigabeposition zum Freigeben der Kapsel (5b) aus dieser Ebene beweglich montiert ist.

10. Maschine nach einem der vorstehenden Ansprüche, umfassend einen Getränkedurchgang (26), z. B. eine Getränkeleitung, in Fluidkommunikation mit dem Getränkeauslass (25), wobei der Durchgang (26) konfiguriert ist, um das Getränk (4) von dem Auslass (25) zu einem Getränkeabgabeauslass (54) hin zu führen, wobei der Durchgang (26) optional mit einem Ventil (30) verknüpft ist, wie einem zentrifugalen und/oder elektrischen Ventil, zum Steuern des Flusses und/oder des Drucks des Getränks (4) entlang des Getränkedurchgangs (26).

11. Maschine nach Anspruch 10, die einen Getränkeaufbereiter (50) umfasst, der einen Aufbereitungshohlraum (51) abgrenzt, z. B. zwischen zwei Oberflächen (52,53), die relativ zueinander beweglich sind, z. B. drehbar beweglich, wobei der Aufbereitungshohlraum (51) mit dem Getränkedurchgang (26) fluidisch verbunden ist, wobei der Aufbereitungshohlraum (51) konfiguriert ist, um das aus dem Getränkeauslass (25) über den Getränkedurchgang (26) bereitgestellte Getränk (4) zu verfeinern, wobei das Ventil (30) beispielsweise zwischen dem Getränkeauslass (25) und dem Aufbereitungshohlraum (51) fluidisch gelegen ist.

12. Maschine nach einem der vorstehenden Ansprüche, wobei:
- der Rahmen und/oder das Gehäuse einen Boden umfasst oder an diesem fixiert ist, der konfiguriert ist, um auf einer Trageoberfläche außerhalb dieser Maschine (1) zu ruhen, wenn das Inhaltsstoffhandhabungssystem (10,20) für die Zentrifugation um die Verarbeitungsachse (30') gedreht wird, z. B. einer externen Trageoberfläche, die durch eine Tischplatte ausgebildet wird, wobei die Verarbeitungsachse (30') in einem Winkel relativ zu diesem Boden in dem Bereich von 0° bis 60°, beispielsweise von 0° bis 45°, wie von 0° bis 30°, z. B. von 0° bis 15°, typischerweise von im Wesentlichen 0° steht; und/oder
- der Rahmen und/oder das Gehäuse einen Motor (2) trägt, der mit dem Inhaltsstoffhandhabungssystem (10,20) verbunden, beispielsweise direkt oder über ein Getriebe (3), wie mindestens einem von Riemen, z. B. Zahnriemen, Zahnrädern, z. B. Stirnrädern, und Verbindungsstangen verbunden ist; und/oder
- einer oder mehrere der Getränkeauslässe (25) und der Wassereingänge (24) mit einem oder mehreren Kapselöffnern (24',25') verknüpft sind, wie Kapseldurchstechern (24',25'); und/oder
- der Verarbeitungshohlraum (5) eine Vielzahl von Getränkeauslässen (25) aufweist, die an dem Verarbeitungshohlraum (5) um die zentrale Verarbeitungsachse (30') peripher angeordnet sind, und/oder den Wassereinlass (24) aufweist, der an dem Verarbeitungshohlraum (5) auf der oder angrenzend an die Verarbeitungsachse (30') gelegen ist.

13. System, umfassend eine Maschine (1), wie in einem der vorstehenden Ansprüche definiert, und die Kapsel (5b), die den Geschmacksinhaltsstoff (5a) enthält.

14. Verfahren zum Zubereiten des Getränks (4) in einer Maschine (1), wie in einem der Ansprüche 1 bis 12 definiert, aus dem innerhalb der Kapsel (5b) bereitgestellten Geschmacksinhaltsstoff (5a) in die Maschine (1), das Verfahren umfassend:
- Halten der Kapsel (5b) zwischen der ersten und der zweiten Inhaltsstoffhandhabungsvorrichtung (10,20) in der Transferkonfiguration;
- relatives Bewegen der ersten und der zweiten Inhaltsstoffhandhabungsvorrichtung (10,20) mit der Kapsel (5b) in die Inhaltsstoffverarbeitungskonfiguration durch Betätigung durch den Handhabungsvorrichtungsaktuator (41);
- Bewegen des mindestens einen Befestigungselements (41') in die Befestigungsposition, um die erste und die zweite Kapselhandhabungsvorrichtung (10,20) mit der Kapsel (5b) in der Verarbeitungskonfiguration durch Betätigung durch den Handhabungsvorrichtungsaktuator (41) aneinander zu befestigen;
- Zuführen des Wassers (4') über den Wassereinlass (24) in die Kapsel (5b) in dem Verarbeitungshohlraum (5) und Zentrifugieren des Geschmacksinhaltsstoffs (5a) mit dem Wasser (4') und Ausbilden des Getränks (4);
- Freigeben des Getränks (4) aus der Kapsel (5b) über den Getränkedurchgang (26);
- Bewegen des mindestens einen Befestigungselements (41') in die Lösungsposition durch Betätigung durch den Handhabungsvorrichtungsaktuator (41); und
- relatives Bewegen durch Betätigung durch den Handhabungsvorrichtungsaktuator (41) der ersten und der zweiten Inhaltsstoffhandhabungsvorrichtung (10,20) mit der Kapsel (5b) von der Inhaltsstoffverarbeitungskonfiguration zu der Inhaltsstofftransferkonfiguration und Freigeben der Kapsel (5b) aus der ersten und der zweiten Handhabungsvorrichtung (10,20).

15. Verwendung einer Kapsel als die Kapsel (5b) zum:
- Gehandhabtwerden durch eine Maschine, wie in einem der Ansprüche 1 bis 12 definiert;
- Implementieren des Systems nach Anspruch 13; oder
- Durchführen des Verfahrens nach Anspruch 14,
wobei die Kapsel (5b):
- zwischen der ersten und der zweiten Inhaltsstoffhandhabungsvorrichtung (10,20) in der Transferkonfiguration gehalten wird;
- mit der ersten und der zweiten Inhaltsstoffhandhabungsvorrichtung (10,20) in die Inhaltsstoffverarbeitungskonfiguration durch relatives Bewegen der Handhabungsvorrichtungen (10,20) in die Inhaltsstoffverarbeitungskonfiguration durch Betätigung durch den Handhabungsvorrichtungsaktuator (41) gebracht werden;
- mit der ersten und der zweiten Kapselhandhabungsvorrichtung (10,20) in der Verarbeitungskonfiguration durch Bewegen des Befestigungselements/der Befestigungselemente (41') in die Befestigungsposition durch Betätigung durch den Handhabungsvorrichtungsaktuator (41) befestigt wird;
- mit dem Wasser (4') durch Zuführen über den Wassereinlass (24) in die Kapsel (5b) in dem Verarbeitungshohlraum (5) bereitgestellt wird, wobei der Geschmacksinhaltsstoff (5a) mit dem Wasser (4') zentrifugiert wird und das Getränk (4) ausgebildet;
- das Getränk (4) über den Getränkedurchgang (26) freigibt;
- mit der ersten und der zweiten Kapselhandhabungsvorrichtung (10,20) durch Bewegen des Befestigungselements/der Befestigungselemente (41') durch Betätigung durch den Handhabungsvorrichtungsaktuator (41) in die Lösungsposition gelöst wird; und
- aus der ersten und der zweiten Handhabungsvorrichtung (10,20) durch relatives Bewegen der ersten und der zweiten Inhaltsstoffhandhabungsvorrichtung (10,20) durch Betätigung durch den Handhabungsvorrichtungsaktuator (41) von der Inhaltsstoffverarbeitungskonfiguration zu der Inhaltsstofftransferkonfiguration freigegeben wird.

## Revendications

1. Machine (1) destinée à préparer une boisson (4) à partir d'un ingrédient aromatisant (5a) dans une cavité de traitement (5), telle qu'une cavité (5) pour maintenir ledit ingrédient (5a) fourni à l'intérieur d'une capsule (5b), en mélangeant ledit ingrédient (5a) avec de l'eau (4') et en entraînant par centrifugation un tel ingrédient (5a) et ladite eau (4') autour d'un axe de traitement (30') pour former ladite boisson (4), une telle machine (1) comprenant :
- un système rotatif de manipulation d'ingrédient (10, 20) pour maintenir et faire tourner ledit ingrédient aromatisant (5a) et de l'eau pendant une centrifugation autour de l'axe de traitement (30'), le système de manipulation d'ingrédient (10, 20) ayant au moins une sortie de boisson (25) et au moins une entrée d'eau (24) pour fournir ladite eau (4') audit ingrédient (5a), par ex. à l'intérieur de ladite capsule (5b), le système (10, 20) ayant un premier dispositif de manipulation (10) et un second dispositif de manipulation (20) d'ingrédient qui sont mobiles l'un par rapport à l'autre à partir :
- d'une configuration de transfert d'ingrédient pour recevoir ledit ingrédient (5a) par les premier et second dispositifs de manipulation de capsule (10, 20) et/ou libérer ledit ingrédient (5a) du premier et second dispositifs de manipulation d'ingrédient (10, 20) ; jusqu'à
- une configuration de traitement d'ingrédient pour centrifuger ledit ingrédient (5a) et de l'eau (4') par rotation autour de l'axe de traitement (30') ;
- et inversement ;
- un actionneur de dispositif de manipulation (41), tel qu'un moteur ou une poignée utilisateur, conçu pour déplacer relativement les premier et second dispositifs de manipulation de capsule (10, 20) entre les configurations de transfert et de traitement ;
et
- un châssis de machine et/ou un boîtier (40) qui sont fixes lorsque le système de manipulation d'ingrédient (10, 20) est mis en rotation pour une centrifugation et qui supporte le système de manipulation d'ingrédient (10, 20), éventuellement les premier et second dispositifs de manipulation (10, 20) étant montés en rotation sur le châssis et/ou le boîtier (40) par l'intermédiaire d'un ou plusieurs paliers (19, 29), tels que des roulements à billes,
**caractérisée en ce que** ladite machine comprend en outre au moins un élément de fixation mobile de manière sélective dans une position de fixation pour fixer ensemble les premier et second dispositifs manipulation de capsule dans la configuration de traitement et dans une position de détachement dans laquelle les premier et second dispositifs de manipulation de capsule sont mobiles de la configuration de traitement à la configuration de transfert et/ou inversement, dans laquelle l'élément de fixation (41') est actionné par l'actionneur de dispositif de manipulation (41) dans la position de fixation et/ou dans la position de détachement, l'élément de fixation (41') étant par exemple sollicité dans la position de fixation ou dans la position de détachement, par ex. par un élément élastique (41"), par ex. un bras allongé, éventuellement :
- l'actionneur de dispositif de manipulation (41) étant fixe de manière angulaire par rapport au châssis et/ou au boîtier (40) autour de l'axe de traitement (30') lorsque le système de manipulation d'ingrédient (10, 20) est mis en rotation pour une centrifugation ; et/ou
- l'élément de fixation (41') étant fixe de manière angulaire par rapport au premier dispositif de manipulation d'ingrédient (10) et/ou au second dispositif de manipulation d'ingrédient (20) autour de l'axe de traitement (30'), par ex. lorsque le système de manipulation d'ingrédient (10, 20) est en rotation pour une centrifugation.

2. Machine selon la revendication 1, qui comprend un verrou d'élément de fixation (41b) conçu pour verrouiller l'élément de fixation (41') dans la position de fixation et pour déverrouiller l'élément de fixation (41') de telle sorte que l'élément de fixation (41') se déplace et/ou est mobile dans la position de détachement, éventuellement le verrou d'élément de fixation (41b) étant fixe de manière angulaire par rapport à l'élément de fixation (41') autour de l'axe de traitement (30'), par ex. lorsque le système de manipulation d'ingrédient (10, 20) est en rotation pour une centrifugation.

3. Machine selon la revendication 2, dans laquelle l'actionneur de dispositif de manipulation (41) est conçu pour entraîner le verrou d'élément de fixation (41b) à partir :
- d'une position de déverrouillage d'élément de fixation dans une position de verrouillage d'élément de fixation une fois que les premier et second dispositifs de manipulation de capsule (10, 20) ont été déplacés de manière relative par l'actionneur de dispositif de manipulation (41) dans la configuration de traitement ; et/ou
- d'une position de verrouillage d'élément de fixation dans une position de déverrouillage d'élément de fixation avant que les premier et second dispositifs de manipulation de capsule (10, 20) ne soient déplacés de manière relative par l'actionneur de dispositif de manipulation (41) hors de la configuration de traitement vers la configuration de transfert.

4. Machine selon l'une quelconque revendication précédente, dans laquelle l'actionneur de dispositif de manipulation (41) est conçu pour entraîner le verrou d'élément de fixation (41b) par l'intermédiaire d'une transmission (41a) qui est fixe de manière angulaire par rapport au châssis et/ou au boîtier (40) autour de l'axe de traitement (30') lorsque le système de manipulation d'ingrédient (10, 20) est mis en rotation pour une centrifugation, éventuellement la transmission (41a) étant mobile en translation pour entraîner le verrou d'élément de fixation (41b) entre sa position de déverrouillage d'élément de fixation et sa position de verrouillage d'élément de fixation, par ex. la transmission (41a) étant mobile de manière parallèle à l'axe de traitement (30').

5. Machine selon l'une quelconque revendication précédente, dans laquelle l'élément de fixation (41') est solidaire de, ou monté sur l'un parmi les premier et second dispositifs de manipulation de capsule (10, 20), et coopère avec un récepteur d'élément de fixation (21) qui est solidaire de, ou monté sur l'autre parmi les premier et second dispositifs de manipulation de capsule (10, 20), l'élément de fixation (41') ayant une forme sensiblement en crochet et le récepteur d'élément de fixation (21) ayant une forme de coopération sensiblement en crochet.

6. Machine selon l'une quelconque revendication précédente, qui comprend une pluralité d'éléments de fixation (41') répartis autour de l'axe de traitement (30'), par ex. de manière périphérique autour d'au moins l'un parmi les premier et second dispositifs de manipulation de capsule (10, 20), éventuellement les éléments de fixation (41') étant solidaires de, ou fixés ou assemblés à une base (41‴), la base (41‴) par exemple :
- s'étendant de manière périphérique au moins partiellement autour de l'un parmi les premier et second dispositifs de manipulation de capsule (10, 20) ; et/ou
- étant reliée aux éléments de fixation (41') par au moins un élément élastique correspondant (41"), par exemple chaque élément de fixation (41') étant relié à la base (41‴) par un élément élastique correspondant (41") moyennant quoi chaque élément élastique (41") relie à la base (41‴) une, deux ou, au plus trois éléments de fixation (41').

7. Machine selon l'une quelconque revendication précédente, dans laquelle l'actionneur de dispositif de manipulation (41) est conçu pour déplacer de manière relative les premier et second dispositifs de manipulation de capsule (10, 20) et/ou actionner l'élément de fixation (41'), lorsqu'il est présent par l'intermédiaire de ladite transmission (41a), par l'intermédiaire d'une liaison comprenant au moins l'une parmi : une liaison par engrenage, une liaison par levier, une liaison par suiveur de came et came, et une liaison magnétique.

8. Machine selon l'une quelconque revendication précédente, dans laquelle le châssis et/ou le boîtier de machine (40) délimitent un passage de fourniture d'ingrédient (60) conçu pour permettre une fourniture par gravité dudit ingrédient (5a) vers le système rotatif de manipulation d'ingrédient (10, 20) et un passage d'évacuation de déchet (70) conçu pour permettre une évacuation par gravité de déchet, par ex. un ingrédient utilisé, du système rotatif de manipulation d'ingrédient (10, 20), éventuellement, ledit passage étant conçu pour permettre un passage de ladite capsule (5b) lorsque la cavité (5) est conçue pour maintenir ledit ingrédient (5a) fourni à l'intérieur d'une capsule (5b).

9. Machine selon la revendication 8, dans laquelle le passage de fourniture (60) est pourvu d'un guide (61, 61a) pour guider ladite capsule (5b) lorsqu'elle est fournie, tel qu'un guide (61, 61a) formant un évidement et/ou un rail, le guide (61, 61a) étant conçu pour coopérer avec une forme de capsule complémentaire telle qu'une bride de capsule (5b'), le guide (61, 61a) étant associé à une butée (61b) conçue pour immobiliser ladite capsule (5b) guidée par le guide (61, 61a) au niveau d'un niveau entre les premier et second dispositifs de manipulation d'ingrédient (10, 20), par ex. au niveau de l'axe de traitement (30'), par exemple une butée (61b) fixée à ou solidaire du guide (61, 61a), éventuellement le guide ou une partie (61a) de celui-ci étant monté de manière mobile vers et à l'écart de l'axe de traitement (30'), par ex. au niveau de l'axe de traitement (30'), par exemple une butée (61b) fixée au guide (61, 61a) ou solidaire du guide (61, 61a), éventuellement le guide ou une partie (61a) de celui-ci étant monté de manière mobile vers et à l'écart de l'axe de traitement (30'), par ex. monté de manière mobile sur un bras élastique entre une position de maintien pour immobiliser ladite capsule (5b) à un niveau d'un niveau entre les premier et second dispositifs de manipulation d'ingrédient (10, 20), par ex. au niveau de l'axe de traitement (30'), et une position de libération pour libérer ladite capsule (5b) dudit niveau.

10. Machine selon l'une quelconque revendication précédente, qui comprend un passage de boisson (26), par ex. un conduit de boisson, en communication fluidique avec la sortie de boisson (25), le passage (26) étant conçu pour guider ladite boisson (4) de la sortie (25) vers une sortie de distribution de boisson (54), le passage (26) étant éventuellement associé à une vanne (30), telle qu'une vanne centrifuge et/ou électrique, pour commander l'écoulement et/ou la pression de ladite boisson (4) le long du passage de boisson (26).

11. Machine selon la revendication 10, qui comprend un conditionneur de boisson (50) délimitant une cavité de conditionnement (51), par ex. entre deux surfaces (52, 53) qui sont mobiles l'une par rapport à l'autre, par ex. mobiles en rotation, la cavité de conditionnement (51) étant reliée de manière fluidique au passage de boisson (26), la cavité de conditionnement (51) étant conçue pour raffiner ladite boisson (4) fournie à partir de la sortie de boisson (25) par l'intermédiaire du passage de boisson (26), la vanne (30) étant par exemple située de manière fluidique entre la sortie de boisson (25) et la cavité de conditionnement (51).

12. Machine selon l'une quelconque revendication précédente, dans laquelle :
- le châssis et/ou le boîtier comprennent ou sont fixés à un fond conçu pour reposer sur une surface de support externe à une telle machine (1) lorsque le système de manipulation d'ingrédient (10, 20) tourne autour de l'axe de traitement (30') pour une centrifugation, par ex. une surface de support externe formée par un plateau de table, l'axe de traitement (30') étant à un angle par rapport à un tel fond dans la plage allant de 0° à 60°, par exemple de 0° à 45°, telle que de 0° à 30°, par ex. de 0° à 15°, de manière générale de sensiblement 0° ; et/ou
- le châssis et/ou le boîtier supportant un moteur (2) qui est relié au système de manipulation d'ingrédient (10, 20), par exemple relié de manière directe ou par l'intermédiaire d'une transmission (3) telle qu'au moins l'un parmi une des courroies, par ex. des courroies dentées, des engrenages, par ex. des roues droites cylindriques, et des bielles ; et/ou
- une ou plusieurs parmi la ou les sorties de boisson (25) et la ou les entrées d'eau (24) associées à un ou plusieurs ouvre-capsules (24', 25'), tels que des perceurs de capsules (24', 25') ; et/ou
- la cavité de traitement (5) ayant une pluralité de sorties de boisson (25) agencées de manière périphérique au niveau de la cavité de traitement (5) autour de l'axe de traitement central (30') et/ou ayant l'entrée d'eau (24) située au niveau de la cavité de traitement (5) sur l'axe de traitement (30') ou adjacent à celui-ci.

13. Système comprenant une machine (1) selon l'une quelconque revendication précédente et ladite capsule (5b) contenant ledit ingrédient aromatisant (5a).

14. Procédé de préparation dans une machine (1), selon l'une quelconque des revendications 1 à 12, ladite boisson (4) à partir dudit ingrédient aromatisant (5a) étant fournie à l'intérieur de ladite capsule (5b) dans la machine (1), le procédé comprenant :
- le maintien de ladite capsule (5b) entre les premier et second dispositifs de manipulation d'ingrédient (10, 20) dans la configuration de transfert ;
- le déplacement relatif des premier et second dispositifs de manipulation d'ingrédient (10, 20) avec ladite capsule (5b) dans la configuration de traitement d'ingrédient par actionnement par l'actionneur de dispositif de manipulation (41) ;
- le déplacement dudit au moins un élément de fixation (41') dans la position de fixation pour fixer ensemble les premier et second dispositifs de manipulation de capsule (10, 20) avec ladite capsule (5b) dans la configuration de traitement par actionnement par l'actionneur de dispositif de manipulation (41) ;
- l'introduction de ladite eau (4') par l'intermédiaire de l'entrée d'eau (24) dans ladite capsule (5b) dans la cavité de traitement (5) et la centrifugation de l'ingrédient aromatisant (5a) avec l'eau (4') et la formation de ladite boisson (4) ;
- la libération de la boisson (4) de ladite capsule (5b) par l'intermédiaire du passage de boisson (26) ;
- le déplacement dudit au moins un élément de fixation (41') dans la position de détachement par actionnement par l'actionneur de dispositif de manipulation (41) ; et
- le déplacement relatif, par actionnement par l'actionneur de dispositif de manipulation (41), des premier et second dispositifs de manipulation d'ingrédient (10, 20) avec ladite capsule (5b) de la configuration de traitement d'ingrédient à la configuration de transfert d'ingrédient, et la libération de ladite capsule (5b) des premier et second dispositifs de manipulation (10, 20).

15. Utilisation d'une capsule en tant que ladite capsule (5b) destinée à :
- être manipulée par une machine selon l'une quelconque des revendications 1 à 12 ;
- la mise en œuvre du système selon la revendication 13 ; ou
- la réalisation du procédé selon la revendication 14,
dans laquelle ladite capsule (5b) :
- est maintenue entre les premier et second dispositifs de manipulation d'ingrédient (10, 20) dans la configuration de transfert ;
- est amenée avec les premier et second dispositifs de manipulation d'ingrédient (10, 20) dans la configuration de traitement d'ingrédient en déplaçant de manière relative les dispositifs de manipulation (10, 20) dans la configuration de traitement d'ingrédient par actionnement par l'actionneur de dispositif de manipulation (41) ;
- est fixée avec les premier et second dispositifs de manipulation de capsule (10, 20) dans la configuration de traitement en déplaçant le ou les éléments de fixation (41') dans la position de fixation par actionnement par l'actionneur de dispositif de manipulation (41) ;
- est fournie avec ladite eau (4') par introduction par l'intermédiaire de l'entrée d'eau (24) dans ladite capsule (5b) dans la cavité de traitement (5), l'ingrédient aromatisant (5a) avec l'eau (4') étant centrifugés et formant ladite boisson (4) ;
- libère la boisson (4) par l'intermédiaire du passage de boisson (26) ;
- est détachée avec les premier et second dispositifs de manipulation de capsule (10, 20) en déplaçant le ou les éléments de fixation (41') vers la position de détachement par actionnement par l'actionneur de dispositif de manipulation (41) ; et
- est libérée des premier et second dispositifs de manipulation (10, 20) en déplaçant de manière relative les premier et second dispositifs de manipulation d'ingrédient (10, 20) de la configuration de traitement d'ingrédient à la configuration de transfert d'ingrédient par actionnement par l'actionneur de dispositif de manipulation (41).
